# EUROPEAN PATENT APPLICATION

(11) **EP 1 569 093 A2**
(43) Date of publication of application: **31.08.2005**
(21) Application number: 04030842.1
(22) Date of filing: 27.12.2004
(51) Int. Cl.: G06F 9/44

(54) **Versioning support in object-oriented programming languages and tools**

(30) Priority: 05.02.2004 US 772992
(71) Applicant: MICROSOFT CORPORATION, Redmond, WA 98052 (US)
(72) Inventor: Williams, Antony S., Redmond Washington 98052 (US); Hodges, C. Douglas, Redmond Washington 98052 (US); Szyperski, Clemens A., Redmond Washington 98052 (US); Miller, James S., Redmond Washington 98052 (US); Rivard, John J., Redmond Washington 98052 (US); Hawkins, Jonathan C., Redmond Washington 98052 (US); Dussud, Patrick H., Redmond Washington 98052 (US); Parthasarathy, Srivatsan, Redmond Washington 98052 (US); Evans, William G., Redmond Washington 98052 (US)
(74) Representative: Grünecker, Kinkeldey, Stockmair & Schwanhäusser Anwaltssozietät

(57) **Abstract**

A versioning policy included in a target component indicates how the target component is to be accessed, for example, either as a library component or a platform component. A component may be designated as a library component when it is not versioned in a binary compatible manner. When other components request such a component they receive specifically the version of the component they requested. On the other hand, a component may be designated as a platform component when it is versioned in a binary compatible manner. When other components request such a component they may receive the latest upgraded version of the component requested instead. Thus, access to an appropriate version of the component (even a version differing from the requested version) is facilitated. Other embodiments include mechanisms for stratifying component scope based on different processing levels.

## Description

### BACKGROUND OF THE INVENTION

### 1. The Field of the Invention

This invention relates to systems, methods, and computer program products for coordinating software components in a software environment.

### 2. Background and Relevant Art

Computerized, electronic systems are increasingly common, in part because such computerized systems automate much of what people previously had to perform manually. Accordingly, computerized systems have added a certain amount of efficiency to people's ability to perform tasks.

The process of generating computerized instructions (also referred to herein as "software" or "programs") for a computerized system is somewhat involved. Ordinarily, a software developer must first think of the desired functions or results that the program should perform, and then enter corresponding text-format instructions into an electronic text file, typically in the form of programming source code. In some cases, such as with interpreted programming languages (e.g., Javascript, Perl, etc.), a computerized system directly interprets entered text-format instructions, and performs the desired function. In other cases, such as with compiled programming languages (e.g., C# - pronounced "C sharp", C++, etc.), text-format instructions are first compiled into object or machine codes that the computerized system can execute.

With more complicated programs, developers will sometimes implement the program's functionality in a number of interoperating "components". Generally speaking, components (or, program components) are sets of computer-executable instructions, much like a larger application program, although tending to be smaller and less complicated since they are typically geared toward providing one or few functions. Since a given component can run sometimes as an independent program, and can also communicate with other components, a more complicated program can also sometimes be referred to interchangeably as a "component". Furthermore, components can be referred to generally as either a "requesting component" or as a "target component", although such a designation may be arbitrary depending on which component or program is accessing the other.

In any case, a program designer can design one component on a computerized system to request access to any number of the computerized system's other components. Target components may include functions that provide basic information such as the user's name and age, or that provide more complicated information such as the user's level of use or sophistication with a given application program. Software components can also provide system functions such as executing a command to open a file, indicating communication protocols so that one component or program can interact with still other components, and so forth. Of course, one will appreciate that a large operating system can include many components that are configured to operate with multiple different programs, and vice versa.

Generally, a requesting component includes a reference to a target component. It may be that a requesting component references a specific version of the target component (a strict reference). Referencing a specific version of target component may occur, for example, when a developer of the requesting component has prior knowledge of the target component and desires to make the requesting component expressly dependent on a specified version of the target component. For example, a requesting "component 1" may be configured to reference a target "version 1.1" of "component 3" to cause "component 1" to expressly depend on version 1.1" of "component 3. On the other hand, it may be that a requesting component references a target component that may or may not even exist when the requesting component was developed (a loose reference). Thus, a developer references a target component without prior knowledge of the target component. Accordingly, the requesting component may discover the existence of a version of the target component at run-time. For example, at run-time "component 1" may discover "version 2.1" of "component 3"

Unfortunately, there exist a number of disadvantages to implementing program components in the overall software design process, whether requesting components reference target components strictly or loosely. For example, when a user updates a target program that is referenced by one or more requesting components, the one or more requesting components may fail if the upgraded version of the target component turns out to be incompatible with the one or more requesting components. This problem can occur when the developer of the requesting component is not able to anticipate the number and type of changes that the developer of the relevant target component may implement in the future. By contrast, system policies prohibiting target component updates, or that prohibit component updates from overwriting prior versions of the target components, can result in systems that are quickly outdated, or that can become inefficient and bulky.

Some attempts to overcome these problems have included system administrators trying to manage strict and loose references to different versions of target components in the same system. In such a scenario, a computerized system identifies the version number of a given target component when it is installed on the computer system, or when the target component is first run. The computerized system then stores the identified target component information along with other information about any other versions of the target component that have also been installed on the system. When a requesting component on the computerized system requests access of a target component, the computerized system then matches the requesting component to the requested version of the target component, as appropriate.

Unfortunately, there exist still a number of disadvantages to this type of system. For example, the only information available for a target component when it is installed on the system may be the version of the target component. However, the system cannot identify whether the particular version of the target component is an upgrade of a prior version of the target component. The system also cannot identify whether a developer intends to upgrade the particular version of the target component at some later point in time, since that information is unknown. This information, as well as other necessary operating parameters must be supplied by the system administrator.

For example, a system administrator must try to configure a system based on what little information about the given target component is available, or what the administrator expects, and then provide this information about the target component to the system when the given target component is installed, or first run. In particular, the system administrator must often provide access rules for different target components that indicate whether some requesting components are required to access specific versions of other target components, and whether still other requesting components are allowed to access updated versions of other target components, and so forth. The system administrator must also provide any other information to the system as conflicts between versions of requesting and target components are realized. Thus, when a requesting component requests a given target component, the system typically grants access to the target component based on the version of the target requested, any versions of the target component stored on the system, and any other system administrator-supplied information.

One will appreciate, however, that this type of system that mixes strict and loose references to target components can be unduly complicated for system administrators. This is particularly true since system administrators are not always privy to what a third-party developer has in mind when the third-party developer is writing a given target component. Furthermore, system administrators cannot always anticipate whether certain target components are intended to be compatible with other versions or types of requesting components. This is particularly true for large systems where large numbers of requesting components are configured to access a wide variety of target components in any given number of ways.

Accordingly, an advantage in the art can be realized with systems, methods, and computer program products that allow present and future versions of requesting and target components to cooperate in a computerized system as configured. In particular, an advantage in the art can be realized with systems and methods that allow such component cooperation automatically, such that programs and components can continue to work effectively with little or no input from a system administrator.

### BRIEF SUMMARY OF THE INVENTION

The present invention solves one or more of the foregoing problems in the prior art with systems, methods, and computer program products that allow program developers to easily accommodate changes in components, modules, and operating systems without impairing program function. In particular, systems are disclosed that allow programs and components that access each other through static or dynamic references to compatibly coexist in an operating system.

In at least one exemplary implementation of the present invention, a determining module can receive a request to access a specified version of a target component from a requesting component. The request may include the versioning policy of the specified target component. Alternately, the determining module can identify the versioning policy of the specified target component. For example, a versioning policy can be included in a data field within the target component. Identification of the versioning policy and specified version can be done in response to the request, when the target component is installed, or when the target component is deployed on the computerized system. Other policies, such as, for example, component scope, can also be identified, as well as any system administrator-provided policies where appropriate. A requesting component is therefore granted access to an appropriate version of the target component primarily based on information contained within the request and contained within the target component.

In another exemplary implementation of the invention, the determining module receives a target component upgrade, and can identify a versioning policy that is associated with the target component and/or the requesting component. Based on the information provided in the versioning policy, the determining module can replace the target component with the upgraded component, or can simply add the target component upgrade to the system so that the original and upgraded versions of the target component coexist. Hence, upgrades are processed for target components as appropriate for requesting components, such that any requesting component that accesses the target component will continue to access the original or prior version of the target component if necessary.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1 illustrates an example computer architecture for providing a requesting component with access to a target component, in accordance with the principles of the present invention;

Figures 2A illustrates an example computer architecture that receives newer versions of existing components in accordance with the principles of the present invention;

Figure 2B illustrates the example computer architecture of Figure 2A after a determination module has determined the versions of the components that are to be retained in accordance with the principles of the present invention;

Figure 3 illustrates an example computer architecture for stratifying component scope at different processing levels in accordance with the principles of the present invention;

Figure 4 illustrates an example flow chart of a method for providing component access in accordance with the principles of the present invention;

Figure 5A illustrates an example flow chart of a method for managing component upgrades in accordance with the principles of the present invention;

Figure 5B illustrates an example flow chart of a method for limiting component scope in accordance with the principles of the present invention; and

Figure 6 illustrates a suitable environment for practicing aspects of the present invention.

### DETAILED DESCRIPTION OF THE PREFERRED EMBODIMENTS

The present invention extends to systems, methods, and computer program products that allow program developers to easily accommodate changes in components, modules, and operating systems without impairing program function. In particular, systems are disclosed that allow programs and components that access each other through static or dynamic references to compatibly coexist in an operating system. The embodiments of the present invention may comprise a special purpose or general-purpose computer including various computer hardware, as discussed in greater detail below.

Embodiments within the scope of the present invention also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer.

When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

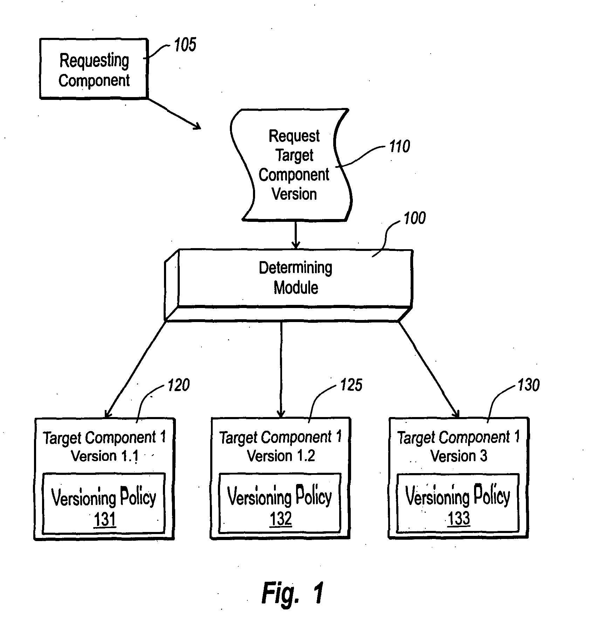

Figure 1 shows exemplary computer architecture for practicing an implementation of the present invention in which a determining module 100 receives one or more requests from a requesting component 105 to access another component or program, such as components 120, 125, and 130. For the purposes of this specification and claims, a "determining module" 100 can include any type of module having executable instructions configured, for example, for identifying a reference to a target component, which includes the name of the component and the originally intended version, and choosing an appropriate target component which will be used to satisfy the request. In some situations, this can include deciding that there is no such target component available, such that the determining module 100 would be configured to return an error. As will also be detailed hereinafter, the determining module 100 can also be configured to identify other information, such as which other components have already been made available for access within a computer system, process, or subprocess.

In addition, a "component", for the purposes of this specification and claims will be understood to include any form of executable instructions that can be run on a computerized system, such as, for example, an interpreted text format file, as well as a file that has been compiled into machine-readable instructions. The term component, therefore, can include both larger application programs and systems that provide a large variety of functions, as well as smaller program and/or system components that provide other components or programs with specific functionality. Furthermore, although some distinction will sometimes be made in this specification between "applications", "application programs", "programs", and components, the distinctions are merely one of convenience in order to clarify, usually, that one set of executable instructions are requesting, or are receiving a request, to access another component since each can be properly be referred to as a component. Hence, the terms "requesting component" and "target component" can include any of the foregoing executable instructions, as will be further detailed herein.

Embodiments of the presentation invention can access components that have been classified as "platform" or "library" components. "Platform" components are components that can be accessed by multiple other components or programs in a computerized system. Platform components are normally accessed only in the most recent form, or upgraded form, such that a requesting component may simply request the target component generally, or a minimum version of the target component, rather than request a specific version of the target component. Thus, the determining module may, for example, be configured to provide a version of a platform component other than the most recent version. In theory, platform components can be overwritten by a component upgrade when the upgrade is received, although there are reasons why this may not be done in practice. Platform components may also sometimes be referred to as "binary compatible" components. By contrast, library components are accessed by another component or program only if precisely the same version of the library component has been referenced.

As depicted in Figure 1, a determining module 100 can receive a request or declaration from a requesting component 105, to access a target component, such as component 120, 125, and 130. For the purposes of this disclosure and claims, the term "target component" refers to a component for which access is sought by a requesting component. One will appreciate, however, that whether a component is a target component or a requesting component is primarily one of perspective, depending on which component requests access of the other. As such, the discussion as applied to target components in this specification and claims can apply equally to requesting components, and vice versa.

In any case, a requesting component 105 can initiate a component access request 110 through the determining module 100, where the request indicates that the requesting component 105 is configured to access a given version of a target component 120, 125, and 130. In some implementations, the request 110, can be a reference found in the source code of the requesting component 105 when the requesting component 105 is first installed on a given computerized system (not shown). Alternatively, a request 110 can be made by the requesting component 105 when the requesting component 105 requests access of a given version of a target component, such as components 120, 125, and 130, at run time.

A "versioning policy", for the purposes of this specification and claims includes any of a given set of properties that can be conveyed from a target component (e.g., 120, 125, 130) to a determining module 100. The versioning policy 131, 132, or 133 specifies whether the corresponding target component 120, 125, 130 can be used instead of a version of the given target component with a lower version number. The versioning policy can include additional information intended to be used by the determining module 100 to decide whether the target component can be used in a given configuration. Thus, the versioning policy 132 may specify that target component 125 (version 1.2) can be used when version 1.1 is requested. In some embodiments, the versioning policy will be found in a predefined location within a target component. In other implementations, the versioning policy can be conveyed to the determining module 100 when the component is installed on the system, or when a first request is made to access a given component, and so forth.

Accordingly, a requesting component can request access to a target component by requesting a specific version of the target component, e.g., request 110 for "component 1" "version 1.1". If the requesting component 105 requests, or is configured to work with a specific version of a target component, determining module 100 can provide the requesting component 105 with access to a specific version of the component, depending on the versioning policy 131, 132, 133 that is present in the target component. As shown in Figure 1, for example, requesting component 105 requests "version 1" of "component 1" by sending a request 110. Hence, determining module 100 grants requesting component 105 access to "version 1.1" of "component 1" even though a more recent version of "component 1", e.g., "version 1.2" 125, exists in the system.

By contrast, in some embodiments, a request for one version of a component results in access to another (e.g., updated or more recent) version of a component. For example, request 100 may be a request to access "version 1.1" of "component 1". However, versioning policy 131 may indicate that "version 1.1" is a platform component (and thus a most recent version of "component 1" is to be provided in response to a request). Furthermore, in some implementations there may nevertheless be multiple versions of a given platform component on a system.

As such, the requesting component can also include information in its request that indicates the lowest possible version of the platform target component that the requesting component 105 can accept. For example, it may be that requesting component 105 requests "version 1.4" of component 1" and that lower versions of "component 1" are not to be returned in response to the request. Accordingly, determining module 100 can provide requesting component 105 with access to "version 3" of "component 1", even though "version 1.1" and "version 1.2" are accessible.

When all accessible versions of a requested component have version designations lower than a specified requested version, determining module 100 can return an appropriate response (e.g.., an error message) to a requesting component. For example, when determining module 100 does not have access to "version 3" of "component 1", determining module 100 can send an error message to requesting component 105 in response to a request for "version 1.4 or higher" of component 1".

It may be that a version number includes two parts, a version and a servicing. Components that have a version number indicating an updated servicing are allowed to replace components that have version numbers indicating older servicing. Utilizing servicing values to facilitate component replacement is particularly advantageous for implementing minor changes that have a reduced likelihood of causing incompatibility with other components, for fixing bugs, or for fixing security issues whether related to library or platform components. That is, servicing values can facilitate "patching" a version of a component. For example, if target component 120 is identified as a library component (such that version 1.1. of the target component is not to be replaced), a developer can still update the target component 120 by updating (e.g., incrementing) a servicing value in the component's version number. Accordingly, the updated target component 120 would essentially be a different servicing of "version 1.1".

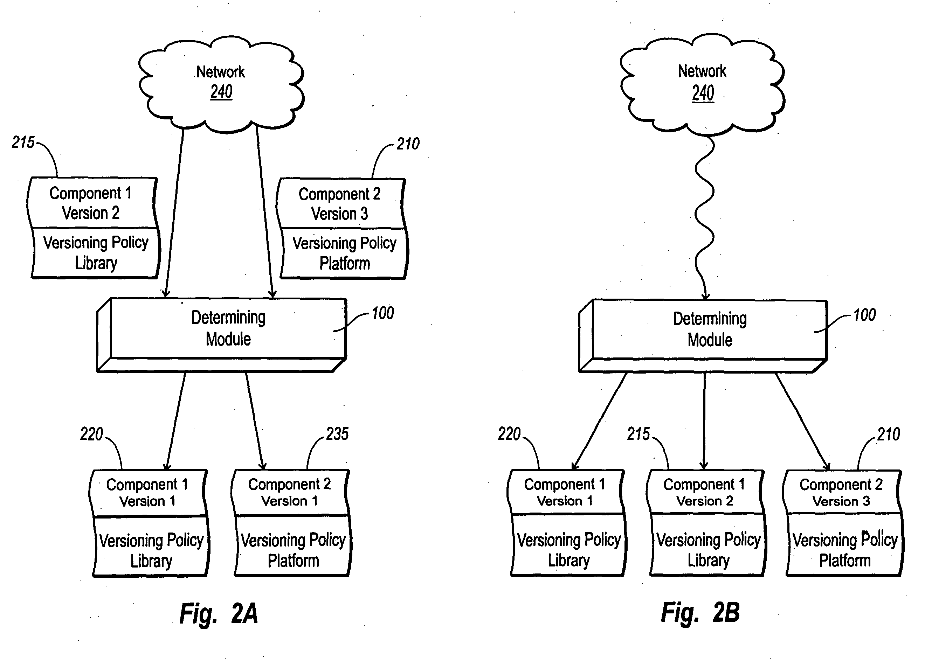

Figure 2A illustrates an example computer architecture that receives newer versions of existing components. That is, determination module 100 can receive upgrades to target components that are already resident at a corresponding computerized system. For example, determining module 100 can receive components 215 and 210 from a network service provider (not shown) connected to network 240. Determining module 100 can receive components 215 and 210 as the result of executing an installation program at the corresponding computerized system (or at the network service provider).

As depicted, components 210 and 215 include versioning policy information, such as, for example that upgraded component 210 is a "version 3" upgrade of "component 2", and that the component is a platform component. As well, component 215 can include information in the form of a versioning policy that the component 215 is library component, or that component 215 otherwise configured such that requesting components can be given access to the specific version represented by component 215.

In response to receiving the components 210 and 215, the determining module 100 determines whether to retain prior versions (which may be referred to as "side-by-side" updating) or replace prior versions (which may be referred to as "in-place" updating) of each received upgraded component. For example, as shown in Figure 2A components 220 and 235 are library and platform components respectively. More specifically, in response to receiving the component 215, the determining module 100 can identify that, since "component 1" is a library component, other programs or components may be configured to specifically access "version 1" of "component 1". Accordingly, determining module 100 can determine that both component 215 and component 220 are to be retained.

More specifically, in response to receiving the component 210, the determining module 100 can identify that, since "component 2" is platform component, requesting programs and components will be given access to the most recent version of component 2. Accordingly, determining module 100 can determine that component 235 is to be replaced with component 210.

Figure 2B illustrates the example computer architecture of Figure 2A after a determination module has determined the versions of the components that are to be retained. As depicted in Figure 2B, both "version 1" (component 220) and "version 2" (component 215) of component 1 remain on the system (a side-by-side update). Also as depicted in Figure 2B, only "version 3" of "component 2" (component 210) remains on the system (an in-place update).

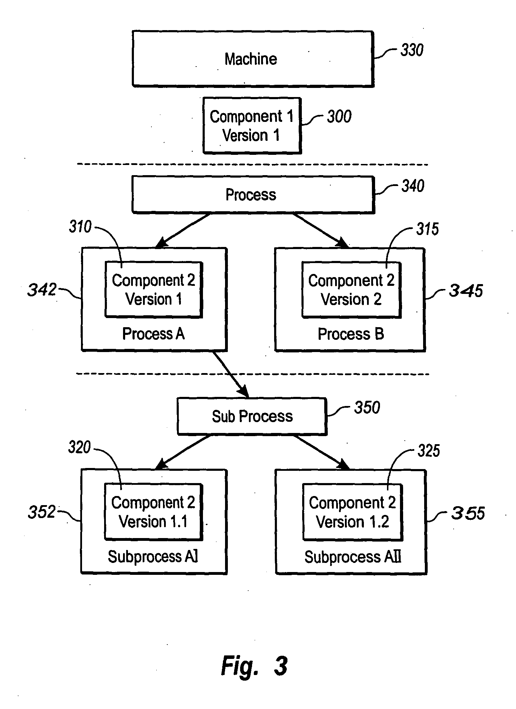

Figure 3 illustrates exemplary computer architecture for stratifying component scope at different processing levels in accordance with an implementation of the present invention. Stratification is based on component scope that applies to target components. By way of explanation and not of limitation, Figure 3 indicates three levels of scope, i.e., a "Machine" level 330, a "Process" level 340, and a "Sub-Process" level 350. One will appreciate, however, after reading this disclosure and claims that there can be greater or fewer numbers of levels, as appropriate. In particular, aspects of the invention allow a target component to supply a versioning policy that requires only one version of the target be made available at a given level (i.e. only one version on the entire machine or only one in a given process or only one in a given subprocess).

For example, a versioning policy that is associated with a given target component 300 can include a set of component scope. Referring briefly back to Figure 1, the component scope can indicate that a requesting component 105 must access the target component 300 at a given process level. As shown in Figure 3, for example, "component 1" "version 1" 300 is identified for machine-level access. Any requesting component installed in the system that requests access of the target component 300, must use "component 1" "version 1" since the target component 300 is configured for machine-level access. As with other versioning policy properties, this process level limitation can be indicated by the developer of a target component before the component is installed on a given system.

Component scope can also indicate larger or smaller scopes for a target component 300, 310, 315, 320, and 325. For example, "versioning policies" identified with a given component 310 can indicate that a given version of the target component 310 is required only within a certain process 342, 345, or sub-process 352, 355. As shown in Figure 3, for example, any requesting component 105 that requests access to a given version of a component 310 can do so within a process 342 without requiring other requesting components (on the system) to use the same target component in other processes 315. As such, component 310 can be used in process 342, while component 315 can be used in process 345. Furthermore, when process A 342 has not selected a particular version, sub-process 350, which depends from process 340, can use different versions of component 310, such as components 320 and 325. This level of granular access to different components can therefore be indicated when the given component is developed, rather than by a system administrator when the given component is installed on the system. The determining module 100 can combine any identified component scope for each target or requesting component to provide a requesting component with appropriate target component access.

Accordingly, identification of an appropriate version of a target component can be based on other policies, such as, for example, component. A determining module can therefore identify an appropriate version of a target component based on any identified policy, such as the versioning policy and component scope of the specified target component, as well as any other system administrator-provided policies where appropriate

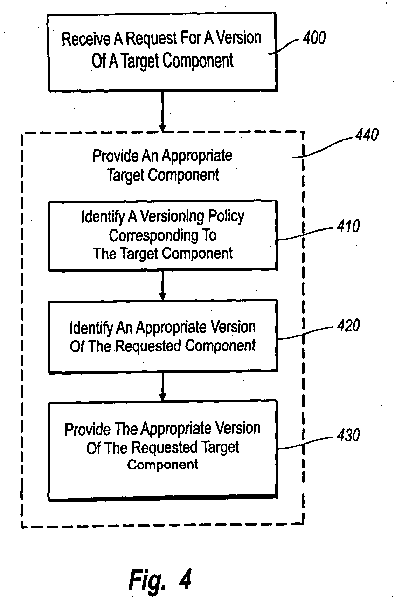

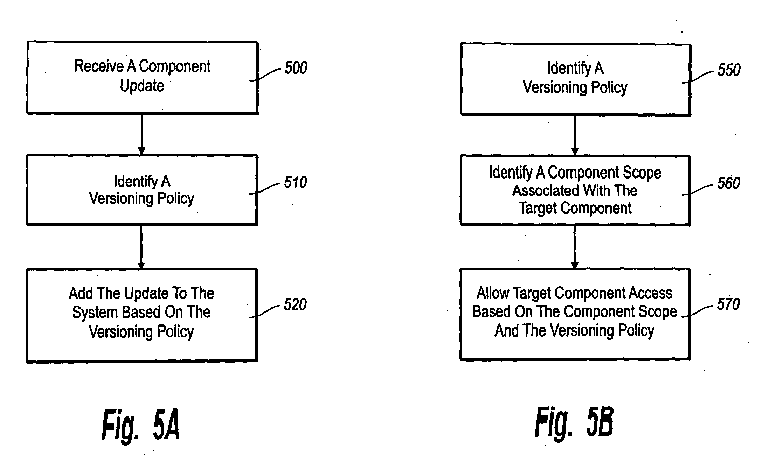

The present invention may also be described in terms of methods comprising functional steps and/or non-functional acts. Figures 4, 5A, and 5B illustrate exemplary flow charts for allowing component access by other programs or components in a computerized system. The methods of Figures 4, 5A, and 5B will be discussed with respect to the modules of the programs illustrated in the preceding Figures.

Figure 4 illustrates an example flow chart of a method for providing component access in accordance with an implementation of the present invention. The method of Figure 4 includes an act 400 of receiving a request for a version of a target component. Act 400 can include receiving a request to access a specified version of a target component, the request being received from a requesting component. For example, a requesting component 105 can request access of a target component, such as component 120, 125, and 130 through a determining module 100. It may also be that the request includes the versioning policy of the version of the target component.

The method also includes a functional result-oriented step 440 of providing an appropriate target component. Step 440 can include any number of corresponding acts for implementing the present invention. However, as depicted in Figure 4, step 440 includes an act 410 of identifying a versioning policy. Act 410 can include identifying a versioning policy of the specified version of the target component. If a versioning policy was included in the request, the determine module 100 may identify such a n included versioning policy. Alternately, the determine module 100 can refer to one or more versions of the target component and identify versioning policies stored in the one or more versions of the target component. For example, the determining module 100 can identify that multiple versions of a component such as a "version 1" 120 and a "version 2" 125 of the same "component 1" exist on the system, each having a corresponding versioning policy 131, 132, and 133. A software developer can include a versioning policy in target components 120, 125, and 130, etc., such that a determining module 100 identifies the versioning policy upon compiling, installing, and or running the developed program or component.

Step 440 also includes an act 430 of providing an appropriate version of the target component. Act 430 can include identifying an appropriate version of the target component based on the versioning policy of the specified target component. For example, the determining module 100 can provide a requesting component 105 with a specific version of the requested target component (a library component), such as component 120. Alternatively, the determining module 100 can provide the requesting component 105 with a more recent version of a component (a platform component), such as component 130.

Figure 5A illustrates an example flow chart of a method for managing component upgrades in accordance with an implementation of the present invention. The method of Figure 5A can be implemented such that a requesting component that accesses the target component continues to operate effectively after the target component has been upgraded. As illustrated, the method depicted in Figure 5A includes an act 500 of receiving a component update. Act 500 can also include identifying that a target component is accessed by a requesting component. For example, referring back to Figure 1, a determining module 100 may be linked to, or contain, a registry or database that, upon installation of a requesting component 105, identifies that the installed program or component or component 105 is configured to access a specific version of a target component such as a "version 1" 120 of "component 1". This determining module 100 can gain this information based on any versioning policy contained in the installed program, as well as contained within any components that program is configured to access.

The method depicted in Figure 5A includes an act 510 of identifying a versioning policy. Act 510 can include identifying a versioning policy in a prior version of the target component, and an updated version of the target component. For example, the determining module 100 identifies the versioning policy in any of the target components 120, 125, and 130, which, as previously described, can indicate the version of the target component 120, 125, and 130, and can indicate that the target component is intended to be a platform or a library component.

The method depicted in Figure 5A further includes an act 520 of adding the component update to the system based at least in part on the versioning policy. Act 520 can include deleting a prior version of the target component and/or adding the updated version of the target component based on the identified versioning policy. For example, if a specific prior version 220 of the component is required for access by another program or component, such as if the component is a library component, the determining module 100 will not overwrite the prior version 220. The determining module 100 will simply add the new version 215 of the component such that programs or components that request a new version 215 of the component can access it. Similarly, programs or components that require the prior version 220 of the component may also access that as well, which preserves the integrity of the requesting program or component. By contrast, if no program or component is identified as requiring a specific version of a given component (a platform component), the determining module 100 can simply overwrite the prior version 235 of the component with the recent version 210 of the component.

Figure 5B illustrates an example flow chart of a method for providing component access at one or more process levels in accordance with an implementation of the present invention. The method of Figure 5B can be implemented to organize one or more target components such that access to the one or more target components is limited. The method depicted in Figure 5B includes an act 550 of identifying a versioning policy. Act 550 can include identifying a versioning policy in a target component. For example, a determining module 100 can receive a component access request from a requesting component, and can identify a versioning from within a received upgrade 215, 210, within an existing target component 220, 225, , and so forth. As previously described, the versioning policy can help the system identify a version number of the target component, as well as whether the target component 220, 225, and 230 is intended to be a library or platform component.

The method depicted in Figure 5B includes an act 560 of identifying a component scope associated with the component. Act 560 can include identifying a component scope associated with the target component where the component scope identifies a property that is associated with a requesting component that can be configured to access the target component. For example, either the target component or the requesting program or component can be associated with a specific component scope that indicates that a version of the target component can be accessed at one of a machine layer, a sub-process layer, and so forth. One will appreciate, however, as described herein, that there can be variety of levels in which component access can be limited, depending on a developer's preferences.

The method depicted in Figure 5B includes an act 570 of allowing target component access based on the component scope and the versioning policy. Act 570 can include allowing at least one of the one or more requesting components to access the target component based on the access property associated with a requesting component and the identified versioning policy. For example, if one or more programs or components 300 are indicated for machine-wide processes 330, only that version of the component 300 will be available to any given requesting component at any given process level. By contrast, if the target component is identified with process level access, the determining module 100 can allow other requesting components to access different versions of the same target component for a given corresponding process or sub-process, as appropriate.

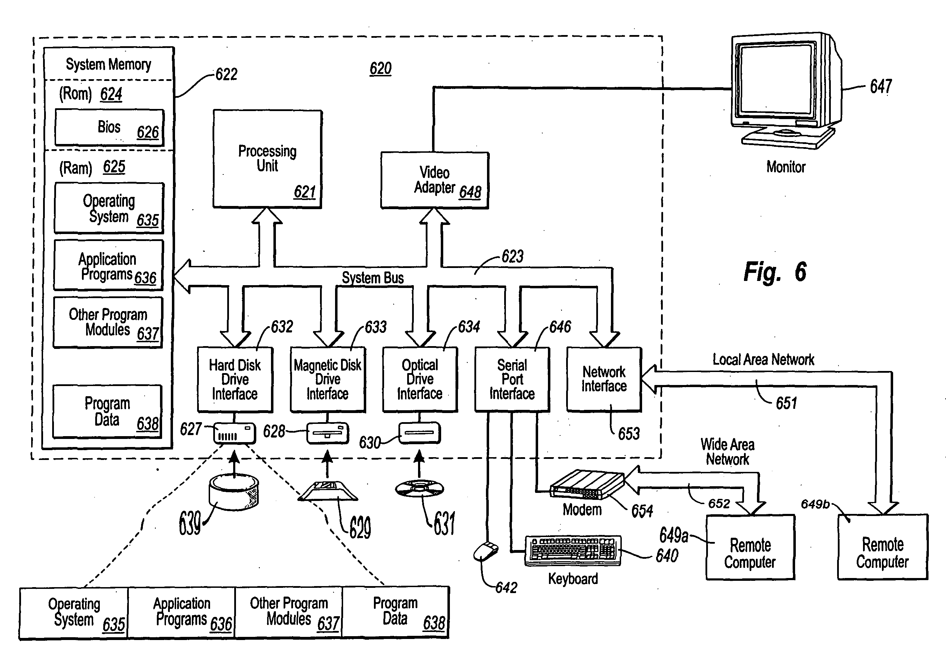

Figure 6 and the following discussion are intended to provide a brief, general description of a suitable computing environment in which the invention may be implemented. Although not required, the invention will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those skilled in the art will appreciate that the invention may be practiced in network computing environments with many types of computer system configurations, including personal computers, hand-held devices, multi-processor systems, microprocessor-based or programmable consumer electronics, network PCs, minicomputers, mainframe computers, and the like. The invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

Those skilled in the art will appreciate that the invention may be practiced in network computing environments with many types of computer system configurations, including personal computers, hand-held devices, multi-processor systems, microprocessor-based or programmable consumer electronics, network PCs, minicomputers, mainframe computers, and the like. The invention may also be practiced in distributed computing environments where local and remote processing devices perform tasks and are linked (either by hardwired links, wireless links, or by a combination of hardwired or wireless links) through a communications network. In a distributed computing environment, program modules may be located in both local and remote memory storage devices.

With reference to Figure 6, an exemplary system for implementing the invention includes a general-purpose computing device in the form of a conventional computer 620, including a processing unit 621, a system memory 622, and a system bus 623 that couples various system components including the system memory 622 to the processing unit 621. The system bus 623 may be any of several types of bus structures including a memory bus or memory controller, a peripheral bus, and a local bus using any of a variety of bus architectures. The system memory includes read only memory (ROM) 624 and random access memory (RAM) 625. A basic input/output system (BIOS) 626, containing the basic routines that help transfer information between elements within the computer 620, such as during start-up, may be stored in ROM 624.

The computer 620 may also include a magnetic hard disk drive 627 for reading from and writing to a magnetic hard disk 639, a magnetic disc drive 628 for reading from or writing to a removable magnetic disk 629, and an optical disc drive 630 for reading from or writing to removable optical disc 631 such as a CD ROM or other optical media. The magnetic hard disk drive 627, magnetic disk drive 628, and optical disc drive 630 are connected to the system bus 623 by a hard disk drive interface 632, a magnetic disk drive-interface 633, and an optical drive interface 634, respectively. The drives and their associated computer-readable media provide nonvolatile storage of computer-executable instructions, data structures, program modules and other data for the computer 620. Although the exemplary environment described herein employs a magnetic hard disk 639, a removable magnetic disk 629 and a removable optical disc 631, other types of computer readable media for storing data can be used, including magnetic cassettes, flash memory cards, digital versatile disks, Bernoulli cartridges, RAMs, ROMs, and the like.

Program code means comprising one or more program modules may be stored on the hard disk 639, magnetic disk 629, optical disc 631, ROM 624 or RAM 625, including an operating system 635, one or more application programs 636, other program modules 637, and program data 638. A user may enter commands and information into the computer 620 through keyboard 640, pointing device 642, or other input devices (not shown), such as a microphone, joy stick, game pad, satellite dish, scanner, or the like. These and other input devices are often connected to the processing unit 621 through a serial port interface 646 coupled to system bus 623. Alternatively, the input devices may be connected by other interfaces, such as a parallel port, a game port or a universal serial bus (USB). A monitor 647 or another display device is also connected to system bus 623 via an interface, such as video adapter 648. In addition to the monitor, personal computers typically include other peripheral output devices (not shown), such as speakers and printers.

The computer 620 may operate in a networked environment using logical connections to one or more remote computers, such as remote computers 649a and 649b. Remote computers 649a and 649b may each be another personal computer, a server, a router, a network PC, a peer device or other common network node, and typically include many or all of the elements described above relative to the computer 620, although only memory storage devices 650a and 650b and their associated application programs 636a and 636b have been illustrated in Figure 6. The logical connections depicted in Figure 6 include a local area network (LAN) 651 and a wide area network (WAN) 652 that are presented here by way of example and not limitation. Such networking environments are commonplace in office-wide or enterprise-wide computer networks, intranets and the Internet.

When used in a LAN networking environment, the computer 620 is connected to the local network 651 through a network interface or adapter 653. When used in a WAN networking environment, the computer 620 may include a modem 654, a wireless link, or other means for establishing communications over the wide area network 652, such as the Internet. The modem 654, which may be internal or external, is connected to the system bus 623 via the serial port interface 646. In a networked environment, program modules depicted relative to the computer 620, or portions thereof, may be stored in the remote memory storage device. It will be appreciated that the network connections shown are exemplary and other means of establishing communications over wide area network 652 may be used.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method in a computerized system that includes one or more program components including one or more requesting components that can request to access one or more target components, the method of providing a requesting component with access to an appropriate version of a target component, comprising the acts of:
receiving a request to access a specified version of a target component, the request being received from a requesting component;
identifying a versioning policy of the specified version of the target component;
identifying an appropriate version of the target component based on the versioning policy of the specified target component;
providing the requesting component with access to the appropriate version of the target component.

2. The method as recited in claim 1, wherein the requested version of the target component is one of a library component and a platform component.

3. The method as recited in claim 1, wherein identifying an appropriate version of the target component comprises identifying a more recent version of the target component in response to a request for an earlier version of the target even though the more recent version and the earlier version are both accessible to the computerized system.

4. The method as recited in claim 3, identifying a more recent version of the target component in response to a request for an earlier version of the target even though the more recent version and the earlier version are both accessible to the computerized system comprises identifying a more recent version of a platform component even though an earlier version of the platform component remained on the system when the more recent version was received at the computerized system.

5. The method as recited in claim 1, wherein the versioning policy of the specified version of the target component is identified when the target component is one or more of compiled, configured, installed, and run on the computerized system.

6. The method as recited in claim 1, wherein version information that identifies the specified target component is stored in the requesting component when the requesting component is one or more of compiled, configured, installed, and run on the computerized system.

7. The method as recited in claim 1, further comprising:
identifying one or more requesting components that are able to access a prior version of the target component;
identifying that none of the one or more requesting components are configured to access the prior version of the target component; and
deleting the prior version of the target component.

8. The method as recited in claim 1, wherein the appropriate version of the target component is the version of the target component that was requested.

9. The method as recited in claim 1, wherein the appropriate version of the target component is different from the version of the target component that was requested.

10. The method as recited in claim 9, wherein target component access is provided to the requesting component through a determining module.

11. The method as recited in claim 10, wherein the availability of one or more of the prior version of the target component and the more recent version of the target component is identified by a determining module when the one or more of the prior version of the target component and the more recent version of the target component is received by the computerized system.

12. The method as recited in claim 1, wherein the versioning policy is inserted into computer-executable instructions in the target component prior to one of installing, configuring, and executing the target component on the computerized system.

13. The method as recited in claim 1, wherein the versioning policy is further identified in any version of the target component.

14. The method as recited in claim 13, wherein the versioning policy identifies that any of the prior version of the target component and the more recent version of the target component is configured to be accessed by a specific version of the requesting component.

15. The method as recited in claim 1, further comprising identifying a component scope that is associated with the target component.

16. The method as recited in claim 15, wherein access to the specified version of the target component is further based on one of the identified component scope associated with the target component, and a target component scope supplied by a system administrator.

17. The method as recited in claim 16, wherein the identified component scope specifies that access to the specified version of the target component is provided in one or more of a machine level, a process level, and a sub-process level.

18. The method as recited in claim 1, wherein the requested target component is a library component, the method further comprising identifying a servicing value associated with the requested target component.

19. The method as recited in claim 1, wherein identifying an appropriate version of the target component comprising identifying an updated version of a library component based on the identified versioning policy and the identified servicing value.

20. A method in a computerized system that includes one or more program components including one or more requesting components that can request to access one or more target components, the method of providing a requesting component with access to an appropriate version of a target component, comprising:
an act of receiving a request to access a specified version of a target component, the request being received from a requesting component;
a step for allowing access to an appropriate version of the requested target component such that the requesting component accesses the appropriate target component as it has been configured to do so, and such that the requesting component does not fail when requesting access to a component that has been upgraded.

21. The method as recited in claim 20, wherein the step for allowing access to an appropriate version of the requested target component comprises the corresponding acts of:
identifying a versioning policy of the specified version of the target component;
receiving a request to access a specified version of a target component, the request begin received from a requesting component;
providing the requesting component with access to the appropriate version of the target component.

22. A method in a computerized system that includes one or more program components including one or more requesting components that can request to access one or more target components, the method of upgrading a target component such that a requesting component that accesses the target component continues to operate effectively after the target component has been upgraded, comprising the acts of:
identifying that a requesting component is configured to access a target component;
identifying a versioning policy in at least an existing version of the target component and a previously installed version of the target component;
and
identifying which versions of the target component should remain on the system based on any identified versioning policy corresponding to at least the existing version of the target component and the previously installed version of the target component.

23. The method as recited in claim 22, further comprising receiving an updated version of the target component over a network from a network service provider.

24. The method as recited in claim 22, wherein, if the versioning policy indicates that the requesting component is a library component, adding the existing version of the target component to the system without removing the previously installed version of the target component.

25. The method as recited in claim 22, wherein, if the versioning policy indicates that the requesting component is a platform component, overwriting the previously installed version of the target component with the existing version of the target component.

26. A computer program product for use in a computerized system including one or more requesting components that are configured to access one or more source components, the computer program product having computer-executable instructions stored thereon that, when executed, cause the computerized system to perform a method of providing a requesting component with access to an appropriate version of a target component, comprising the acts of:
receiving a request to access a specified version of a target component, the request being received from a requesting component;
identifying a versioning policy of the specified version of the target component;
identifying an appropriate version of the target component based on the versioning policy of the specified target component;
providing the requesting component with access to the appropriate version of the target component.

27. A computer program product for use in a computerized system including one or more requesting components that are configured to access one or more source components, the computer program product having computer-executable instructions stored thereon that, when executed, cause the computerized system to perform a method of upgrading a target component such that a requesting component that accesses the target component continues to operate effectively after the target component has been upgraded, comprising the acts of:
identifying that a requesting component is configured to access a target component;
identifying a versioning policy in at least an existing version of the target component and a previously installed version of the target component;
and
identifying which versions of the target component should remain on the system based on any identified versioning policy corresponding to at least the existing version of the target component and the previously installed version of the target component.
